# EUROPÄISCHE PATENTSCHRIFT

(11) **EP 3 198 305 B1**
(45) Veröffentlichungstag und Bekanntmachung des Hinweises auf die Patenterteilung: **12.08.2020**
(21) Anmeldenummer: 15766126.5
(22) Anmeldetag: 15.09.2015
(51) Int. Cl.: G01S 19/49, G01S 19/40, G01S 19/39, G01C 21/14

(54) **GNSS-LOKALISIERUNG DURCH VOR- UND ZURÜCKSCHREIBEN DER POSITION**
GNSS-POSITIONING BY WRITING FORWARD AND BACKWARD OF POSITION
GNSS LOCALISATION PAR ÉCRIRE EN AVANT ET EN ARRIÈRE LA POSITION

(30) Priorität: 24.09.2014 DE 102014219350
(43) Veröffentlichungstag der Anmeldung: 02.08.2017
(73) Patentinhaber: Continental Teves AG & Co. OHG, 60488 Frankfurt am Main (DE)
(72) Erfinder: STÄHLIN, Ulrich, 65760 Eschborn (DE)
(74) Vertreter: Wagner, Philipp
(86) Internationale Anmeldenummer: PCT/EP2015/071100
(87) Internationale Veröffentlichungsnummer: WO 2016/046027

(56) Entgegenhaltungen:
- WO-A1-2012/033807
- WO-A2-98/49580
- DE-A1-102013 016 243

## Beschreibung

Die Erfindung betrifft ein Verfahren zum Bestimmen eines Weges eines Objektes, eine Steuervorrichtung zur Durchführung des Verfahrens und das Fahrzeug mit der Steuervorrichtung.

WO 2013 / 037 844 A2 ist ein Verfahren zum Bestimmen eines Weges eines Objektes in Form eines Fahrzeuges bekannt. Im Rahmen dieses Verfahrens wird eine Position des Fahrzeuges über ein GNSS genanntes globales Navigationssatellitensystem an einer ersten Position bestimmt und mit Fahrdynamikdaten des Fahrzeuges fortgeschrieben, bis über das GNSS eine zweite Position erfasst wird.

Das Dokument WO 2012/033807 A1 offenbart ein Verfahren, bei welchem Ungenauigkeiten in der Erfassung der Position eines Containers durch Rückrechnung ausgeglichen werden.

Es ist Aufgabe der Erfindung, die Bestimmung der Position eines Objekts zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Bestimmen eines Weges eines Objektes, den das Objekt zwischen einer ersten Position und einer zweiten Position zurückgelegt, die Schritte Bestimmen des Weges durch Fortschreiben der ersten Position basierend auf einer Bewegung des Objektes von der ersten Position zur zweiten Position, Korrigieren des Weges basierend auf einem Korrekturweg, der basierend auf der Bewegung des Objektes von der zweiten Position aus zur ersten Position hin zurückgeschrieben ist. Dabei wird ein korrigierter Weg als Ausgangsgröße für den zu bestimmenden Weg im nächsten Iterationsschritt verwendet, wobei der korrigierte Weg ein Mittelwertweg ist, der aus einer Mittelwertbildung zwischen dem bestimmten Weg und dem Korrekturweg gebildet wird.

Dem angegebenen Verfahren liegt die Überlegung zugrunde, dass die Lokalisierung eines Objektes wie im eingangs genannten Fall auf Basis von GNSS in den letzten Jahren bereits ein gutes Niveau bezüglich der Genauigkeit erreicht hat. Probleme bereiten aber weiterhin Situationen mit schlechtem, gestörtem oder gar nicht vorhandenem GNSS-Empfang. Beispiele sind Häuserschluchten, Tunnel oder Parkhäuser. Vor allem bei Tunnelausfahrten, wo plötzlich wieder GNSS-Empfang herrscht, dauert es eine Zeit, bis der Fehler in einer Sensorfusion durch die fehlende GNSS-Stützung wieder ausgeglichen ist.

Hier hat die Sensorfusion bereits einige Erfolge erzielt, indem Daten mit redundantem Informationsgehalt herangezogen wurden, um Fehler oder nicht vorhandene Informationen, wie die fehlende GNSS-Stützung auszugleichen. Hier setzt auch das angegebene Verfahren an, in dem neben dem durch Fortschreibung bestimmten Weg ein redundanter Korrekturweg bereitgestellt wird, der beispielsweise im Rahmen der Sensorfusion zur Korrektur des Weges verwendet werden kann.

Dem Korrekturweg liegt die Überlegung zugrunde, dass eine über ein GNSS bestimmte und mittels Fahrdynamikdaten fortgeschriebene Ausgangsabsolutposition an einem völlig anderen Ort enden kann, als eine nächste mit dem GNSS bestimmte Endabsolutposition. Hier greift der Korrekturweg mit dem Vorschlag an, die Endabsolutposition basierend auf den Fahrdynamikdaten zurückzuschreiben und zu bestimmen, über welchen alternativen Weg (Korrekturweg) die Endabsolutposition erreicht worden wäre. Der Ausgangspunkt dieses alternativen Weges wird üblicherweise nicht mit der Ausgangsabsolutposition zusammenfallen. Die Fortschreibung der Ausgangsabsolutposition und die Zurückschreibung der Endabsolutposition liefert damit zwei verschiedene Wege, die nun im Rahmen einer Sensorfusion oder einem beliebigen anderen Korrekturverfahren verwendet werden können, um den eigentlich zu bestimmenden Weg zu präzisieren.
Obwohl der Gedanke zuvor anhand eines GNSS und Fahrdynamikdaten erläutert wurde, ist der grundsätzliche Gedanke mit beliebigen Sensoren umsetzbar, die eine Position und eine Bewegung eines Objektes liefern, dessen Weg erfasst werden soll.

In einer Weiterbildung des angegebenen Verfahrens wird der Weg nur dann korrigiert, wenn der durch Fortschreiben der ersten Position basierend auf der Bewegung des Objektes von der ersten Position zur zweiten Position bestimmte Weg eine vorbestimmte Bedingung erfüllt. Diese vorbestimmte Bedingung kann zweckmäßigerweise eine Genauigkeitsanforderung für den im Rahmen der Fortschreibung bestimmten Weg beschreiben. Fallen beispielsweise das Ende des über die Fortschreibung bestimmten Weges und die nächste bestimmte Absolutposition (Endabsolutposition) nicht allzu weit auseinander, dann kann gegebenenfalls auf das Zurückschreiben verzichtet werden, weil der Aufwand an Rechenressourcen in keinem Verhältnis zum Gewinn an Präzision steht, der durch das Zurückschreiben erzielbar wäre.

In einer zusätzlichen Weiterbildung des angegebenen Verfahrens kann zum Korrigieren des Weges zwischen dem durch Fortschreiben der ersten Position basierend auf der Bewegung des Objektes von der ersten Position zur zweiten Position bestimmten Weg und dem Korrekturweg ausgewählt werden. Mit der Auswahl wird eine rechenressourcenarme Korrekturmöglichkeit im Rahmen des angegebenen Verfahrens vorgeschlagen.

In einer alternativen oder zusätzlichen Weiterbildung des angegebenen Verfahrens kann zum Korrigieren des Weges der durch Fortschreiben der ersten Position basierend auf der Bewegung des Objektes von der ersten Position zur zweiten Position bestimmten Weg basierend auf dem Korrekturweg gefiltert werden. Die Filterung kann dabei beliebig ausgeführt sein. Beispielsweise könnte die Filterung über einen Beobachter realisiert werden. Unter einen solchen Beobachter kann jedes Filter fallen, das eine analoge oder digitale Zustandsbeobachtung des Weges und des Korrekturweges zulässt. So kann beispielsweise ein Luenberger Beobachter herangezogen werden. Soll das Rauschen mit berücksichtigt werden, käme ein Kalman-Filter in Betracht. Soll auch noch die Form des Rauschens berücksichtigt werden, so könnte ggf. ein Partikelfilter herangezogen werden, der eine Grundmenge an verfügbaren Rauschszenarien besitzt und das bei der Elimination zu berücksichtigende Rauschszenario beispielsweise durch eine Monte-Carlo-Simulation auswählt. Grundsätzlich liefert ein Kalman-Filter hinsichtlich seiner notwendigen Rechenressourcen ein optimales Ergebnis.

Statt eines Beobachters kann die Filterung eine mathematische Verknüpfung des Weges und des Korrekturweges umfassen. Eine einfache Verknüpfung könnte hier durch eine Mittelwertbildung zwischen dem Weg und dem Korrekturweg erreicht werden. Eine alternative Möglichkeit für eine Verknüpfung wäre, die beiden Wege zu Korrelieren. Dabei könnten der durch Fortschreiben der ersten Position basierend auf der Bewegung des Objektes von der ersten Position zur zweiten Position bestimmten Weg und/oder der Korrekturweg bei der Filterung gewichtet werden.

In einer anderen Weiterbildung umfasst das angegebene Verfahren den Schritt Erfassen wenigstens der zweiten Position mit einem GNSS genannten globalen Navigationssatellitensystem. Die erste Position kann dabei aus dem letzten korrigierten Weg gewonnen werden. Die Bewegung des Objektes kann dabei mit einem Dynamiksensor, im Falle eines Fahrzeuges des Objektes mit einem Fahrdynamiksensor gewonnen werden.

Gemäß einem weiteren Aspekt der Erfindung ist eine Steuervorrichtung eingerichtet, eines der angegebenen Verfahren durchzuführen.
In einer Weiterbildung der angegebenen Steuervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem anderen Aspekt der Erfindung umfasst ein Fahrzeug eine angegebene Steuervorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit einer Zeichnung näher erläutert werden, wobei:
Fig. 1 eine Prinzipdarstellung eines Fahrzeuges auf einer Straße,
Fig. 2 eine Prinzipdarstellung des Fahrzeuges der Fig. 1 auf der Straße,
Fig. 3 eine Prinzipdarstellung zweier Absolutpositionen sowie mögliche Bewegungswege des Fahrzeuges der Fig. 1, und
Fig. 4 eine Prinzipdarstellung eines Fusionssensors in dem Fahrzeug der Fig. 1 zeigen.

In den Figuren werden gleiche technische Elemente mit gleichen Bezugszeichen versehen und nur einmal beschrieben.

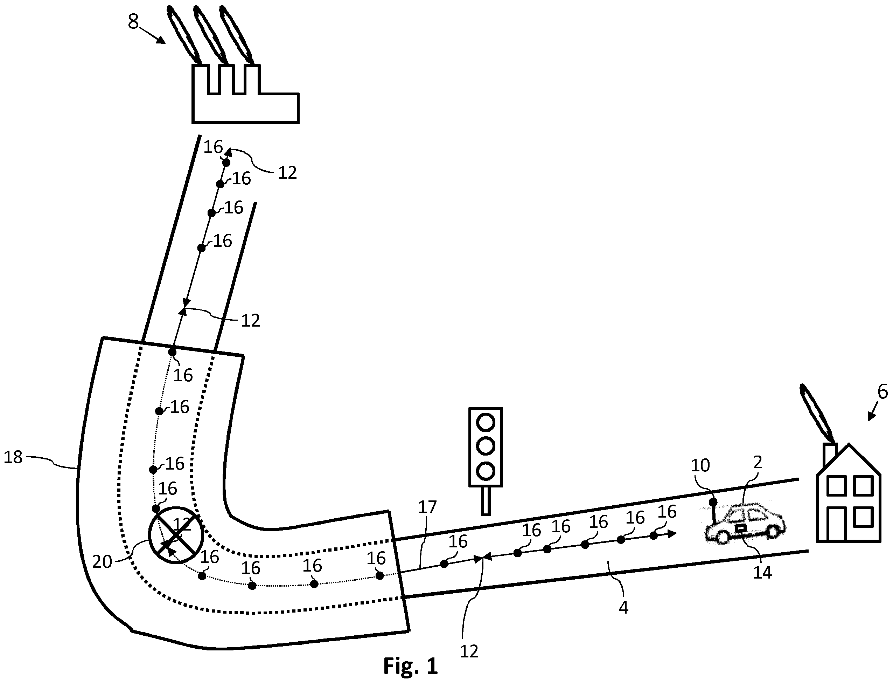

Es wird auf Fig. 1 Bezug genommen, die ein Fahrzeug 2 auf einer Straße 4 zeigt, das zwischen Startpunkt 6 und einem Zielpunkt 8 fährt.

Das Fahrzeug 2 besitzt eine Antenne 10 zum Empfang eines Signals aus einem globalen Satellitennavigationssystem, nachstehend GNSS genannt. Die Antenne 10 wird daher nachstehend als GNSS-Antenne 10 bezeichnet. Über die GNSS-Antenne 10 kann das Fahrzeug 2 in einer noch zu beschreibenden Weise in regelmäßigen zeitlichen Abständen seine Absolutposition 12 auf der Straße 4 bestimmen.

Ferner besitzt das Fahrzeug 2 einen Fahrdynamiksensor 14. Der Fahrdynamiksensor 14 erfasst die Bewegung des Fahrzeuges 2 und gibt in regelmäßigen zeitlichen Abständen Fahrdynamikdaten 16 aus, die die Fahrdynamik des Fahrzeuges 2 beschreiben. Dabei sind die zeitlichen Abstände bei der Erfassung der Absolutposition 12 des Fahrzeuges 2 größer, als die zeitlichen Abstände bei der Erfassung der Fahrdynamikdaten 16.

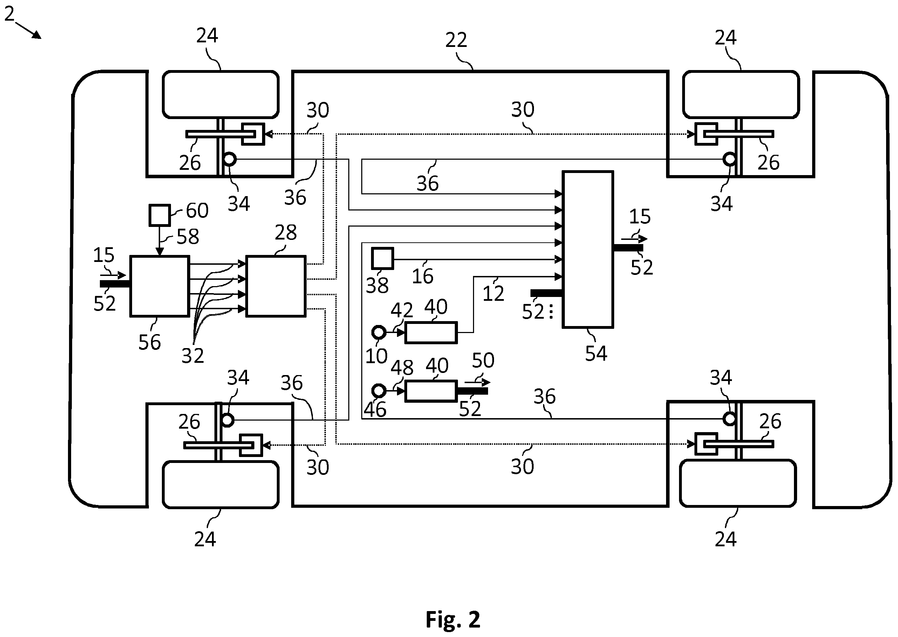

Die Absolutposition 12 und die Fahrdynamikdaten 16 können dann zu in Fig. 2 angedeuteten Lagedaten 15 des Fahrzeuges 2 fusioniert werden, die die Lage des Fahrzeuges 2 hinsichtlich Position, Geschwindigkeit und Beschleunigung in bis zu sechs Freiheitsgraden präzise beschreiben. Allgemein ausgedrückt wird mit der Absolutposition 12 und den Fahrdynamikdaten 16 ein Weg 17 erfasst, den das Fahrzeug 2 auf der Straße 4 fährt.

Ist das GNSS jedoch beispielsweise unter einem Tunnel 18 abgeschattet, dann kann keine Absolutposition 12 erfasst werden. Das ist in Fig. 1 durch ein entsprechendes Kreuz 20 angedeutet. Bei der Ausfahrt aus dem Tunnel 18, wenn das GNSS wieder verfügbar ist, muss das Fahrzeug 2 dann den Weg 17 des Fahrzeuges 2 erst wieder neu bestimmen. Da das GNSS die Absolutposition 12 des Fahrzeuges 2 jedoch nur sehr unpräzise beschreibt, kann dies eine Zeit dauern.

Hier greift das Ausführungsbeispiel mit der Überlegung an, aus zwei aufeinanderfolgenden Absolutpositionen 12 und dazwischenliegenden Fahrdynamikdaten 16 zwei verschiedene Wege 17 abzuleiten. Ein erster Weg 17 beschreibt, die Bewegung des Fahrzeuges 2 ausgehend von der Start-Absolutposition 12, ohne die Ziel-Absolutposition 12 zu berücksichtigen. Ein zweiter Weg 17 beschreibt die Bewegung des Fahrzeuges 2 von einer Ziel-Absolutposition 12 ausgehend, ohne die Start-Absolutposition 12 zu berücksichtigen. Die beiden Wege 17 können dann beispielsweise durch eine Sensorfusion miteinander verknüpft werden. Darauf wird an späterer Stelle näher eingegangen.

Zunächst soll das Fahrzeug 2 näher betrachtet werden. Es wird auf Fig. 2 Bezug genommen, die eine schematische Ansicht des Fahrzeuges 2 zeigt.

Das Fahrzeug 2 umfasst ein Chassis 22 und vier Räder 24. Jedes Rad 24 kann über ortsfest am Chassis 22 befestigte Aktoren in seiner Bewegung gesteuert werden. In Fig. 2 sind beispielhaft Bremsen 26 gezeigt, die das jeweilige Rad 24 gegenüber dem Chassis 4 verlangsamt können, um eine Bewegung des Fahrzeuges 2 auf einer nicht weiter dargestellten Straße zu verlangsamen.

Zur Ansteuerung der Aktoren sind in dem Fahrzeug 2 Aktorsteuervorrichtungen vorhanden. In Fig. 2 ist als Aktorsteuervorrichtung eine Bremssteuervorrichtung 28 gezeigt, die mit Bremsauslösesignalen 30 die Bremsen 26 in einer an sich bekannten Weise auszulösen. Die Auslösung der Bremsen 26 wird der Bremssteuervorrichtung 28 mit Steuersignalen 32 vorgegeben.

Die Steuersignale 32 werden entweder vom Fahrer des Fahrzeuges 2 oder von Applikationen in dem Fahrzeug 2 erzeugt. Derartige sind in der Regel sogenannte Fahrerassistenzsysteme, die mit einer am Fahrzeug 2 vorhandenen Sensorik das Fahrzeug 2 über die Aktoren, wie die Bremsen 26 in einem Sollzustand halten.

Die Sensorik des Fahrzeuges 2 kann beispielsweise an jedem Rad 24 einen Drehzahlsensoren 34 zur Erfassung der Drehzahl 36 des jeweiligen Rades umfassen. Ferner kann die Sensorik des Fahrzeuges 2 einen Fahrdynamiksensor 38 zur Erfassung der Fahrdynamikdaten 16 des Fahrzeuges 2 umfassen, die eine Bewegung des Fahrzeuges 2 in bestimmten Freiheitsgraden beschreiben. Die Fahrdynamikdaten 16 können eine Nickrate, eine Wankrate, eine Gierrate, eine Längbeschleunigung, eine Querbeschleunigung und/oder eine Hochachsenbeschleunigung beschreiben. Ferner kann die Sensorik des Fahrzeuges 2 einen GNSS-Empfänger 40 umfassen, der über die GNSS-Antenne 10 ein GNSS-Signal 42 empfängt und daraus in an sich bekannter Weise die Absolutposition 12 des Fahrzeuges 2 ableitet. Zur Sensorik des Fahrzeuges 2 kann auch ein sogenannter Car2X-Transmitter 44 gezählt werden, der über eine Car2X-Antenne 46 aus einem Fahrzeug-Ad-Hoc-Netzwerk Nachrichtensignale 48 empfangen und Botschaften 50 von anderen Fahrzeugen in dem Fahrzeug-Ad-Hoc-Netzwerk extrahieren kann. Diese Botschaften 50 enthalten in der Regel zumindest die Positionsdaten der Fahrzeuge.

Die Daten der Sensorik können über direkte Verbindungen oder über einen Datenbus 52 im Fahrzeug 2 versendet werden.

Die gesamten Daten oder wenigstens ein Teil der Daten aus der Sensorik können einem Fusionssensor 54 zugeführt werden, der die Daten der Sensorik fusionieren kann, um die mit der Sensorik gewonnen Informationen zu präzisieren und/oder neue Informationen zu gewinnen. Ein Ergebnis des Fusionssensors 54 können beispielsweise die oben erwähnten Lagedaten 15 sein, die dann in den Datenbus 52 eingespeist werden.

Die Lagedaten 15 können dann von den oben genannten Applikationen verwendet werden um die Aktorsteuervorrichtungen anzusteuern. Im Rahmen der vorliegenden Ausführung soll als beispielhaft Applikation ein zu den Fahrerassistenzsystemen gehörende Fahrdynamikregelung 56 erläutert werden.

Die Fahrdynamikregelung 56 erfasst die Lagedaten 15 des Fahrzeuges 2 und einen Lenkwinkel 58 des Fahrzeuges 2, der beispielsweise über ein Lenkrad 60 vom Fahrer vorgebbar ist. Der Lenkwinkel 60 definiert eine Fahrtrajektorie für das Fahrzeug 2 entlang des Weges 17. Auf diesem Weg dreht sich das Fahrzeug 2 mit einer vorbestimmten Gierrate.

Verliert das Fahrzeug 2 beispielsweise auf einer rutschigen Straße seine Bodenhaftung dann beginnt es zu untersteuern oder zu übersteuern und dreht sich mit einer Gierrate, die von der durch die Fahrtrajektorie vorgegebenen Gierrate abweicht. Diese Gierratenabweichung kann von der Fahrdynamikregelung 56 basierend auf den Lagedaten 15 erfasst werden. Als Reaktion auf die Gierratenabweichung gibt die Fahrdynamikregelung 56 die Steuersignale 32 derart aus, dass die Bremsen 26 individuell angesteuert werden, so dass dem Fahrzeug 2 eine Gierrate aufgezwungen wird. Diese Gierrate wirkt der Gierrate beim Untersteuern oder Übersteuern entgegen und hebt die zuvor genannte Gierratenabweichung wieder auf, so dass das Fahrzeug 2 stabil auf seinem Weg 17 gehalten wird.

Weitere in dem Fahrzeug 2 verwendbare Applikationen sind eine Applikation zum hochautomatisierten Fahren (HAF), ein automatischer Bremsassistent oder dergleichen.

Nachstehend soll die im Rahmen der Fig. 1 erläuterte Sensorfusion näher beschrieben werden, im Rahmen derer eine unpräzise Beschreibung der Absolutposition 12 des Fahrzeuges 2 möglichst schnell ausgefiltert werden soll.

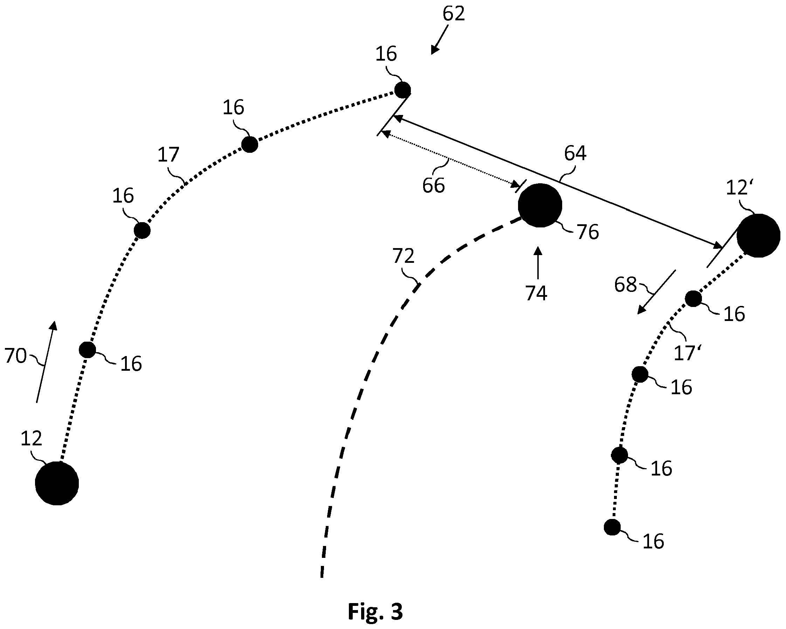

Hierzu wird auf Fig. 3 Bezug genommen, die eine schematische Darstellung von zwei erfassten Absolutpositionen 12, 12' des Fahrzeuges 2 zeigt.

Unter der Annahme, dass für das Fahrzeug 2 eine Start-Absolutposition 12 erfasst wurde, dann kann diese in einer noch zu beschreibenden Weise, beispielsweise mit einem Strap-Down-Alorithmus, basierend auf den Fahrdynamikdaten 16 fortgeschrieben werden. Es ergibt sich somit ein Weg 17, den das Fahrzeug 2 ausgehend von der Start-Absolutposition 12 zurückgelegt hat.

Wird nun eine weitere Absolutposition 12' als Ziel-Absolutposition 12' am Ende 62 des Weges 17 erfasst, dann kann verglichen werden, welchen Abstand 64 das Ende 62 des von der Start-Absolutposition 12 aus fortgeschriebenen Weges 17 von dieser Ziel-Absolutposition 12' hat. Überschreitet der Abstand 64 einen vorbestimmten Abstand 66 als vorbestimmte Bedingung, dann kann ein Korrekturverfahren ausgelöst werden, um die Ziel-Absolutposition 12' zu präzisieren. Das Korrekturverfahren kann aber auch stets ausgeführt werden.
Hierzu wird der Weg 17 des Fahrzeuges 2 ausgehend von der Ziel-Absolutposition 12' basierend auf den Fahrdynamikdaten 16 zurückgeschrieben, was nachstehend durch das Bezugszeichen 17' angedeutet werden soll. Das Zurückschreiben grenzt sich vom oben genannten Fortschreiben dadurch ab, dass der Weg 17' beim Zurückschreiben in einer Richtung 68 betrachtet wird, die zeitlich einer Richtung 70 beim Fortschreiben des Weges 17 entgegengerichtet ist. Ansonsten kann der Weg 17' beim Zurückschreiben grundsätzlich mit denselben Algorithmen erzeugt werden, wie beim Fortschreiben, muss es jedoch nicht.

Die beiden erzeugten Wege 17, 17' werden dann miteinander verknüpft. Hierzu kann beispielsweise ein Mittelwert zwischen den beiden Wegen 17, 17' gebildet werden. Ein derartiger Mittelwertweg 72 ist in Fig. 3 gestrichelt angedeutet.

Ein sich am Ende 74 dieses Mittelwertweges 72 ergebende Korrekturposition 76 kann dann als Start-Absolutposition 12 für den nächsten Weg 17 verwendet werden, der sich an den Mittelwertweg 72 anschließt.

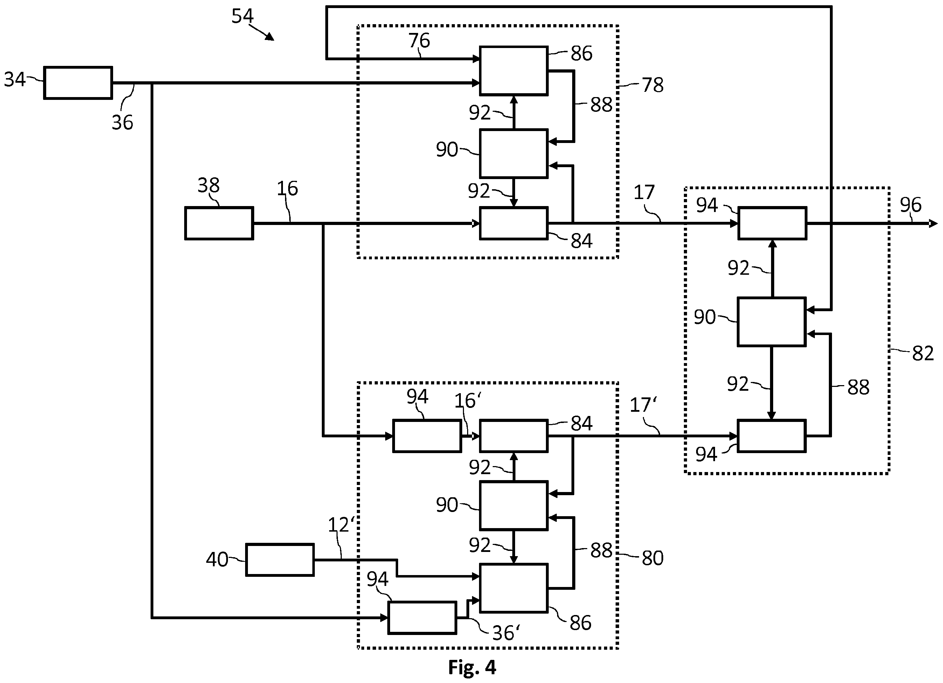

Eine Alternative zur Mittelwertbildung soll nachstehend anhand von Fig. 4 erläutert werden, die eine Prinzipdarstellung des Fusionsfilters 54 zeigt.
Der Fusionsfilter 54 ist in einen ersten Unterfilter 78, einen zweiten Unterfilter 80 und einen dritten Unterfilter 82 aufgeteilt.

Der erste Unterfilter 78 funktioniert im Prinzip wie ein herkömmlicher Fusionsfilter, wie er beispielsweise aus der WO 2013 / 037 844 A2 bekannt ist. Er umfasst einen beispielsweise aus der DE 10 2006 029 148 A1 bekannten Strapdown-Algorithmus 84, der basierend auf den Fahrdynamikdaten 16 den Weg 17 fortschreibt. Der erste Unterfilter 78 umfasst ferner ein Fahrzeugmodell 86 des Fahrzeuges 2, in dem basierend auf der zuletzt bestimmten Korrekturposition 76 und den Raddrehzahlen des Fahrzeuges 2 ein Vergleichsweg 88 bestimmt wird. Der Weg 17 und der Vergleichsweg 88 werden nun in einem Kalman-Filter 90 einander gegenübergestellt, wobei der Kalman-Filter 90 in an sich beispielsweise aus der WO 2013 / 037 844 A2 bekannter Weise je einen Fehlerhaushalt 92 für den Weg 17 und den Vergleichsweg 88 bestimmt. Basierend den Fehlerhaushalten 92 werden nun der Weg 17 und der Vergleichsweg 88 iterativ korrigiert. Der so bestimmte Weg 17 wird an den dritten Unterfilter 82 ausgegeben.

Auch der zweite Unterfilter 80 funktioniert im Prinzip wie ein oben genannter herkömmlicher Fusionsfilter. In diesem sind jedoch Speicher 94 vorhanden, die die Fahrdynamikdaten 16 und die Raddrehzahlen 36 so zwischenspeichern, dass in dem zweiten Unterfilter 80 der Weg 17' durch das zuvor erläuterte Zurückschreiben gewonnen werden kann. Aus den zwischengespeicherten Fahrdynamikdaten 16' kann dann ebenfalls in einem Strap-Down-Algorithmus 84 der Weg 17' zurückgeschrieben werden. Ein entsprechender Vergleichsweg 88 kann dann basierend auf den zwischengespeicherten Raddrehzahlen 36' und der aus dem GNSS-Empfänger 40 gewonnenen Absolutposition 12 in einem Fahrzeugmodell 86 bestimmt werden, das analog zum Fahrzeugmodell 86 im ersten Unterfilter 78 aufgebaut sein kann. Als Absolutposition 12 sollte dabei die Ziel-Absolutposition 12'verwendet werden. Dann kann die Fusion zwischen dem zurückgeschriebenen Weg 17' und dem Vergleichsweg 88 entsprechend dem ersten Unterfilter 78 in einem weiteren Kalman-Filter 90 stattfinden.

Der fortgeschriebene Weg 17 und der zurückgeschriebene Weg 17' können dann im dritten Unterfilter 82 in einem Speicher 94 hinterlegt und abschließend wieder mit einem Kalman-Filter 90 korrigiert werden, wobei die beiden Wege 17, 17' direkt im Speicher 94 korrigiert werden können. Der so korrigierte Weg 96 kann dann ausgegeben werden, wobei das Ende 74 des korrigierten Weges 96 als Korrekturposition 76 an den ersten Unterfilter 78 ausgegeben wird.

Der korrigierte Weg 96 kann dabei mit einem Blockansatz berechnet werden, wobei der korrigierte Weg 96 vollständig basierend auf einem zur Verfügung stehenden Weg 17, 17' bestimmt wird. Alternativ wäre jedoch auch ein Sliding-Window-Ansatz möglich, je nachdem wieviel Rechenleistung zur Verfügung steht.

## Patentansprüche

1. Verfahren zum Bestimmen eines Weges (17, 72, 96) eines Objektes (2), den das Objekt (2) zwischen einer ersten Position (12) und einer zweiten Position (12') zurückgelegt, umfassend:
- Bestimmen des Weges (17, 72, 96) durch Fortschreiben der ersten Position (12) basierend auf einer Bewegung (16) des Objektes (2) von der ersten Position (12) zur zweiten Position (12'),
- Korrigieren des Weges (17, 72, 96) basierend auf einem Korrekturweg (17'), der basierend auf der Bewegung (16) des Objektes (2) von der zweiten Position (12') aus zur ersten Position (12) hin zurückgeschrieben ist;
**dadurch gekennzeichnet, dass**
ein korrigierter Weg als Ausgangsgröße für den zu bestimmenden Weg im nächsten Iterationsschritt verwendet wird,
wobei der korrigierte Weg ein Mittelwertweg (72) ist, der aus einer Mittelwertbildung zwischen dem bestimmten Weg und dem Korrekturweg gebildet wird.

2. Verfahren nach Anspruch 1, wobei der Weg (17, 72, 96) korrigiert wird, wenn der Weg (17, 72, 96), der durch Fortschreiben der ersten Position (12) basierend auf der Bewegung (16) des Objektes (2) von der ersten Position (12) zur zweiten Position (12') bestimmt wird, eine vorbestimmte Bedingung (66) erfüllt.

3. Verfahren nach Anspruch 2, wobei die vorbestimmte Bedingung (66) umfasst, dass das Ende des über die Fortschreibung bestimmten Weges und eine nächste bestimmte Absolutposition nicht weiter als ein vorbestimmter Wert auseinander fallen.

4. Verfahren nach einem der vorstehenden Ansprüche, wobei zum Korrigieren des Weges (17, 72, 96) der Weg (17, 72, 96), der durch Fortschreiben der ersten Position (12) basierend auf der Bewegung des Objektes (2) von der ersten Position (12) zur zweiten Position (12') bestimmt wird, basierend auf dem Korrekturweg (17') gefiltert (54, 72) wird.

5. Verfahren nach Anspruch 4, wobei die Filterung (54, 72) eine Mittelwertbildung (72) umfasst.

6. Verfahren nach Anspruch 4 oder 5, wobei der durch Fortschreiben der ersten Position (12) basierend auf der Bewegung des Objektes (2) von der ersten Position (12) zur zweiten Position (12') bestimmte Weg (17, 72, 96) und/oder der Korrekturweg (17') bei der Filterung (54, 72) gewichtet werden.

7. Verfahren nach einem der vorstehenden Ansprüche, umfassend:
- Erfassen wenigstens der zweiten Position (12') mit einem GNSS genannten globalen Navigationssatellitensystem.

8. Verfahren nach einem der vorstehenden Ansprüche, umfassend:
- Erfassen der Bewegung (16) des Objektes (2) mit einem Dynamiksensor (38).

9. Steuervorrichtung zur Durchführung eines Verfahrens nach einem der vorstehenden Ansprüche.

10. Fahrzeug (2), umfassend eine Steuervorrichtung nach Anspruch 9.

## Claims

1. A method for determining a route (17, 72, 96) of an object (2), which is travelled by the object (2) between a first position (12) and a second position (12'), said method comprising:
- determining the route (17, 72, 96) by continuously writing the first position (12) on the basis of a movement (16) of the object (2) from the first position (12) to the second position (12'),
- correcting the route (17, 72, 96) on the basis of a corrected route (17') which is written backward from the second position (12') to the first position (12) on the basis of the movement (16) of the object (2);
**characterized in that**
a corrected route is used as the output variable for the route to be determined in the next iteration step,
wherein the corrected route is an average route (72) which is formed from an averaging between the determined route and the corrected route.

2. The method according to Claim 1, wherein the route (17, 72, 96) is corrected if the route (17, 72, 96), which is determined by continuously writing the first position (12) on the basis of the movement (16) of the object (2) from the first position (12) to the second position (12'), meets a predetermined condition (66).

3. The method according to Claim 2, wherein the predetermined condition (66) comprises the fact that the end of the route determined by means of the continuous writing and a next determined absolute position do not differ from each other by more than a predetermined value.

4. The method according to any one of the preceding claims, wherein in order to correct the route (17, 72, 96), the route (17, 72, 96), which is determined by continuously writing the first position (12) on the basis of the movement of the object (2) from the first position (12) to the second position (12'), is filtered (54, 72) on the basis of the corrected route (17').

5. The method according to Claim 4, wherein the filtering (54, 72) comprises an averaging (72).

6. The method according to Claim 4 or 5, wherein the route (17, 72, 96) determined by continuously writing the first position (12) on the basis of the movement of the object (2) from the first position (12) to the second position (12') and/or the corrected route (17') is/are weighted during the filtering (54, 72).

7. The method according to any one of the preceding claims, comprising:
- capturing at least the second position (12') with a global navigation satellite system (GNSS).

8. The method according to any one of the preceding claims, comprising:
- capturing the movement (16) of the object (2) with a dynamic sensor (38).

9. A control device for carrying out a method according to any one of the preceding claims.

10. A vehicle (2) comprising a control device according to Claim 9.

## Revendications

1. Procédé pour la détermination d'un chemin (17, 72, 96) d'un objet (2), lequel est parcouru par l'objet (2) entre une première position (12) et une deuxième position (12'), comprenant :
- détermination du chemin (17, 72, 96) par actualisation de la première position (12) basé sur un mouvement (16) de l'objet (2) de la première position (12) à la deuxième position (12').
- correction du chemin (17, 72, 96) basé sur un chemin de correction (17'), lequel est réinitialisé de la deuxième position (12') à la première position (12), basé sur le mouvement (16) de l'objet (2) ;
**caractérisé en ce qu'**
un chemin corrigé est utilisé comme grandeur de sortie pour le chemin devant être déterminé à l'étape d'itération suivante,
le chemin corrigé étant un chemin de moyenne (72), lequel est formé à l'aide d'une formation de moyenne entre le chemin déterminé et le chemin de correction.

2. Procédé selon la revendication 1, le chemin (17, 72, 96) étant corrigé lorsque le chemin (17, 72, 96), lequel est déterminé par l'actualisation de la première position (12) basé sur le mouvement (16) de l'objet (2) de la première position (12) à la deuxième position (12'), remplit une condition prédéterminée (66).

3. Procédé selon la revendication 2, la condition prédéterminée (66) comprenant le fait que la fin du chemin déterminé par l'actualisation et une position absolue déterminée suivante ne sont pas éloignées l'une de l'autre de plus d'une valeur prédéterminée.

4. Procédé selon l'une des revendications précédentes, le chemin (17, 72, 96), lequel est déterminé par actualisation de la première position (12) basé sur le mouvement de l'objet (2) de la première position (12) à la deuxième position (12'), est filtré (54, 72) basé sur le chemin de correction (17'), pour la correction du chemin (17, 72, 96).

5. Procédé selon la revendication 4, le filtrage (54, 72) comprenant une formation de moyenne (72).

6. Procédé selon la revendication 4 ou 5, le chemin (17, 72, 96) déterminé par actualisation de la première position (12) basé sur le mouvement de l'objet (2) de la première position (12) à la deuxième position (12') et/ou le chemin de correction (17') sont pondérés par le filtrage (54, 72).

7. Procédé selon l'une des revendications précédentes, comprenant :
- détection au moins de la deuxième position (12') avec un système global de navigation par satellite appelé GNSS.

8. Procédé selon l'une des revendications précédentes, comprenant :
- détection du mouvement (16) de l'objet (2) à l'aide d'un capteur de dynamique (38).

9. Dispositif de commande pour l'exécution d'un procédé selon l'une des revendications précédentes,

10. Véhicule (2), comprenant un dispositif de commande selon la revendication 9.
